# EUROPÄISCHE PATENTSCHRIFT

(11) **EP 3 199 124 B1**
(45) Veröffentlichungstag und Bekanntmachung des Hinweises auf die Patenterteilung: **09.05.2018**
(21) Anmeldenummer: 16153369.0
(22) Anmeldetag: 29.01.2016
(51) Int. Cl.: A61C 13/00

(54) **VERFAHREN ZUR HERSTELLUNG EINES DENTALEN OBJEKTES**
METHOD FOR MANUFACTURING A DENTAL OBJECT
PROCÉDÉ DE FABRICATION D'UN OBJET DENTAIRE

(43) Veröffentlichungstag der Anmeldung: 02.08.2017
(73) Patentinhaber: Amann Girrbach AG, 6842 Koblach (AT)
(72) Erfinder: Benjamin, Schlachter, 6890 Lustenau (AT)
(74) Vertreter: Fechner, Thomas

(56) Entgegenhaltungen:
- EP-A1- 2 692 311
- WO-A1-03/032861
- JP-A- 2011 194 119
- US-A1- 2010 058 588

## Beschreibung

Die vorliegende Erfindung betrifft ein Verfahren zur Herstellung eines dentalen Objektes mittels schleifender Bearbeitung eines Rohlings aus Keramik oder einem Keramik-Kunststoff-Verbundmaterial.

Rohlinge aus Keramik oder einem Keramik-Kunststoff-Verbundmaterial können zur Herstellung von dentalen Objekten aufgrund ihrer Härte oft nicht gefräst werden. Oft ist es ausschließlich mittels schleifender Bearbeitung möglich, aus solchen Rohlingen das dentale Objekt herauszuarbeiten. Beim Stand der Technik wird hierzu der Rohling bereichsweise abgeschliffen. Dabei wird in der Regel bis auf gegebenenfalls vorhandene Tragstege oder vom dentalen Objekt distanzierte Wandbereiche des Rohlings das gesamte Material des Rohlings, welches am Ende nicht Teil des dentalen Objektes ist, mittels einer zeilenweisen schleifenden Bearbeitung in Schleifstaub verwandelt. Diese Vorgehensweise ist zum einen sehr zeitaufwendig. Zum anderen stellt sich ein sehr hoher Verschleiß bei dem für die schleifende Bearbeitung verwendeten Schleifwerkzeug ein.

EP 2 692 311 A1 offenbart ein Verfahren mit den Merkmalen des Oberbegriffs des Anspruchs 1.

Aufgabe der Erfindung ist es, Verfahren der oben genannten Art dahingehend zu verbessern, dass sie schneller und mit weniger Verschleiß am Schleifwerkzeug hergestellt werden können.

Zur Lösung dieser Aufgabe schlägt die Erfindung ein Verfahren gemäß Patentanspruch 1 und ein Computerprogramm gemäß Patentanspruch 10 vor. In anderen Worten ist somit vorgesehen, dass mittels des Hineinschleifens des Schleifkanals in den Rohling oder in eine bereits herausgearbeitete Vorvorform ganze Reststücke vom Rohling oder von der Vorvorform abgetrennt werden, um so zunächst eine Vorform quasi als Zwischenprodukt vor der Herstellung der Endaußenkontur des herzustellenden dentalen Objektes zu schaffen. Die Außenkontur dieser Vorform entspricht dabei zumindest als Ganzes noch nicht der Endaußenkontur des herzustellenden dentalen Objektes. Bei dieser erfindungsgemäßen Vorgehensweise wird also nur das Material, in welches der Schleifkanal hineingeschliffen wird, in Schleifstaub verwandelt. Die Reststücke werden mittels des Schleifkanals als größere noch in sich zusammenhängende Teile vom Rohling oder von der Vorvorform abgetrennt. Dies geht wesentlich schneller als die oben geschilderte, beim Stand der Technik bekannte Vorgehensweise, da nicht das gesamte Material des Rohlings, welches zum Schluss nicht Teil des dentalen Objektes ist, abgeschliffen und in Schleifstaub verwandelt wird. Neben dem Zeitvorteil wird bei dieser Vorgehensweise auch der Verschleiß am Schleifwerkzeug gegenüber dem Stand der Technik deutlich verringert. Bevorzugt wird das zumindest eine Reststück bei der Ausführung des erfindungsgemäßen Verfahrens vollständig vom Rohling oder von der Vorvorform abgetrennt. Mit dem Schleifkanal kann grundsätzlich aber auch eine Trennfuge z.B. in Form einer Ausdünnung oder Sollbruchstelle geschaffen werden, die dann ein gezieltes Abbrechen des zumindest einen Reststücks vom Rohling oder der Vorvorform entlang des Schleifkanals ermöglicht. Das im Patentanspruch 1 genannte Abtrennen des Reststücks kann also auch als ein teilweises Abtrennen ausgeführt werden.

Im Gegensatz zum Fräsen, welches immer mit einer definierten Schneide durchgeführt wird, handelt es sich beim Schleifen um eine materialabtragende Bearbeitungsform, bei der das Schleifwerkzeug eine Vielzahl von geometrisch undefinierten Schneiden, z.B. in Form von Schleifkörnern aufweist. Diese werden meist mit hoher Geschwindigkeit unter nicht ständiger Berührung mit dem mittels Schleifen abzutrennenden Werkstoff in Berührung gebracht. Beim Schleifen trennen die zahlreichen Undefinierten Schneiden des Schleifwerkzeugs nur sehr kleine Partikel in Form von Schleifstaub ab, während beim Fräsen oder sonstigen spanenden Bearbeitungsformen wie beim Bohren, in der Regel größere Späne entstehen.

Der Begriff des Hineinschleifens des Schleifkanals in den Rohling oder die Vorvorform bezeichnet das Ausformen des Schleifkanals mittels schleifender Bearbeitung bzw. Schleifen. Beim Schleifkanal handelt es sich um eine Trennfuge, welche in den Rohling oder die Vorvorform hineingeschliffen wird. Ist der Schleifkanal vollständig ausgebildet, so trennt er das Reststück oder die Reststücke vom Rohling und/oder von der Vorvorform vollständig ab. Bevorzugt ist vorgesehen, dass die einander gegenüberliegenden Ränder des Schleifkanals, in den Bereichen, in denen beide einander gegenüberliegenden Ränder des Schleifkanals ausgebildet sind, über den gesamten Verlauf des Schleifkanals einen konstanten Abstand zueinander haben.

In besonders bevorzugten Ausgestaltungsformen des erfindungsgemäßen Verfahrens ist vorgesehen, dass die Eindringtiefe des Schleifwerkzeugs in den Rohling oder in die Vorvorform beim Hineinschleifen des Schleifkanals so groß eingestellt wird, dass der Schleifkanal in einem einzigen Schleifvorgang ausgebildet wird. Bei diesen Ausgestaltungsformen wird also das zumindest eine Reststück durch einen einzigen Schleifvorgang vom Rohling oder von der Vorvorform abgetrennt. Andere Varianten der Erfindung können aber auch vorsehen, dass die Eindringtiefe des Schleifwerkzeugs in den Rohling oder die Vorvorform beim Hineinschleifen des Schleifkanals so groß eingestellt wird, dass der Schleifkanal in wenigen, vorzugsweise in höchstens fünf, Schleifvorgängen in seiner vollen Tiefe ausgebildet wird und damit das Reststück vom Rohling oder von der Vorvorform abtrennt. Wird mehr als ein Schleifvorgang benötigt, so wird der Schleifkanal zunächst in dem ersten oder den ersten Schleifvorgängen als nut- oder rinnenförmige Vertiefung ausgebildet. Erst mit dem letzten Schleifvorgang wird der Schleifkanal dann zur, vorzugsweise vollständigen, Trennfuge, die das Reststück vom Rohling und/oder von der Vorform, vorzugsweise vollständig, abtrennt.

Der Vollständigkeit halber wird darauf hingewiesen, dass nicht nur ein sondern auch mehrere Reststücke mittels eines einzigen Schleifkanals vom Rohling oder von der Vorvorform abgetrennt werden können, um so die Vorform zu schaffen. Es muss auch nicht überall entlang des Schleifkanals auf der zur Außenkontur der Vorform gegenüberliegenden Seite ein Reststück entstehen. Insbesondere dann, wenn man den Schleifkanal etwas breiter und/oder am Rand des Rohlings oder der Vorvorform ausführt, können auch Bereiche vorliegen, an denen gar kein Reststück entsteht.

Vorzugsweise wird bei erfindungsgemäßen Verfahren zur Herstellung der Endaußenkontur des herzustellenden dentalen Objektes ausschließlich geschliffen. Es sind aber auch Kombinationen der Erfindung mit anderen Arbeitsschritten zur Bearbeitung des Rohlings oder der Vorvorform denkbar.

Bei dem Reststück handelt es sich um ein Stück des Rohlings oder der Vorvorform, welches wesentlich größer, vorzugsweise zumindest zehnmal größer, als die Korngröße des beim Schleifen entstehenden Schleifstaubs ist. Die Korngröße des Schleifstaubs beim Schleifen von Keramiken oder Keramik-Kunststoff-Verbundmaterialien weist in der Regel einen Durchmesser von 3µm (Mikrometer) bis 250µm, oft von 50µm bis 100µm auf. Bei dem Reststück oder den Reststücken kann es sich um ein Abfallstück oder Abfallstücke handeln, welche weggeworfen werden. Die Reststücke können aber auch so groß sein, dass sie als Rohling oder Vorvorform zur Herstellung eines anderen dentalen Objektes mit einem erfindungsgemäßen Verfahren oder auch einem anderen Verfahren verwendet werden können.

Bei den dentalen Objekten, welche mit erfindungsgemäßen Verfahren hergestellt werden können, kann es sich insbesondere um Dentalprothesen handeln. Dies sind Produkte wie z.B. künstliche Zähne, Brücken und dergleichen, die dafür vorgesehen sind, im Mund des Patienten dauerhaft zu verbleiben, um dort die nicht mehr vorhandenen oder nur noch teilweise vorhandenen natürlichen Zähne zu ersetzen oder zu ergänzen. Mit erfindungsgemäßen Verfahren können aber insbesondere auch dentale Objekte hergestellt werden, bei denen es sich um dentale Hilfseinrichtungen z.B. zur Herstellung von dentalen Prothesen oder um dentale Provisorien handelt. Dies sind Produkte, die zwar zur Herstellung oder zum Einbau einer Dentalprothese in den Mund des Patienten benötigt oder nur zeitweilig in den Mund des Patienten eingesetzt werden, aber nicht dauerhaft im Mund des Patienten verbleiben.

Wie bereits oben ausgeführt, kann die Vorform mit dem erfindungsgemäßen Verfahren aus einem Rohling aber auch aus einer Vorvorform hergestellt werden. Die Außenkontur der Vorform unterscheidet sich zumindest in gewissen Bereichen, sowohl von der Endaußenkontur des letztendlich herzustellenden dentalen Objektes als auch von der ursprünglichen Außenkontur des Rohlings oder der Außenkontur der Vorvorform. Der Rohling ist dabei, wie im allgemeinen Sprachgebrauch üblich, ein z.B. im Handel erhältliches Produkt, welches sehr verschiedene Außenkonturen aufweisen kann. Es sind scheiben- und plattenförmige Rohlinge genauso bekannt wie Quader, Würfel oder sonstwie ausgeführte Rohlinge im Handel erhältlich. Eine Vorvorform ist durch irgendeinen materialabtragenden Bearbeitungsschritt aus dem Rohling hervorgegangen. Die Vorvorform weist also nicht mehr dieselbe Außenkontur wie der Rohling auf. Sie weist aber auch noch nicht dieselbe Außenkontur wie die Vorform auf. Mit dem erfindungsgemäßen Verfahren ist es möglich, zunächst eine Vorform herzustellen um daraus dann, vorzugsweise mittels weiterer schleifender Bearbeitung, gleich die Endaußenkontur des herzustellenden dentalen Objektes herauszuarbeiten. Das erfindungsgemäße Verfahren kann aber auch iterativ in mehreren Schritten angewendet werden. So kann eine zunächst erfindungsgemäß aus einem Rohling hergestellte Vorform bei einer darauf folgenden nächsten Anwendung des erfindungsgemäßen Verfahrens als Vorvorform für die Herstellung einer weiteren Vorform verwendet werden. Dieser Prozess kann mehrfach hintereinander ausgeführt werden, wobei in der Regel vorgesehen ist, dass die Außenkontur der Vorform zumindest ein Stück näher an die Endaußenkontur des herzustellenden dentalen Objektes angenähert ist, als die Außenkontur der Vorvorform aus der die Vorform herausgearbeitet wurde. Der Vollständigkeit halber wird darauf hingewiesen, dass bei solchen iterativen Herstellungsverfahren nicht alle Verfahrensschritte zwingend erfindungsgemäß ausgeführt werden müssen. Vorvorformen können auch anders hergestellt werden. Z.B. wäre es denkbar, von einem Rohling zunächst ein Stück abzusägen, um so eine Vorvorform herzustellen, welche dann mit einem erfindungsgemäßen Verfahren bearbeitet wird, um eine Vorform zu produzieren.

Bevorzugte Ausgestaltungsformen der Erfindung sehen jedenfalls vor, dass nach Herstellung der Vorform die Endaußenkontur des herzustellenden dentalen Objektes ausschließlich oder zumindest auch durch weiteres Abschleifen der Vorform hergestellt wird. Dabei kann dann, wie gesagt, aus der Vorform gleich die Endaußenkontur des herzustellenden dentalen Objektes herausgearbeitet werden. Genauso gut können auch mehrere Schritte hintereinander erfolgen, bei denen dann hergestellte Vorformen als Vorvorformen zur Herstellung neuer Vorformen vor Herstellung der Endaußenkontur des herzustellenden dentalen Objektes herausgearbeitet werden. Die Vorvorform könnte zur sprachlichen Vereinfachung auch als Grobform oder Vorgängerform bezeichnet werden.

Bei den mittels der Erfindung zu bearbeitenden Werkstoffen handelt es sich um Keramik oder Keramik-Kunststoff-Verbundwerkstoffe, welche in der Regel durch eine sehr große Härte und oft auch Sprödheit gekennzeichnet sind. Besonders bevorzugt handelt es sich um sogenannte Glaskeramiken, Lithium-Disilikat-Keramiken, wie sie z.B. unter den Handelsnamen Ivoclar e.max und Vita Suprinity angeboten werden, oder Keramik-Kunststoff-Verbundwerkstoffe mit ähnlichen physikalischen Eigenschaften. Als Materialkennwerte für bevorzugte Ausgestaltungsformen solcher Keramiken oder Keramik-Verbund-Werkstoffe sind eine Risszähigkeit K1c kleiner oder gleich 15 MPam^{1/2} (MegaPascalWurzelMeter) und/oder Bruchdehnungen kleiner oder gleich 0,1% und/oder Enddichten kleiner oder gleich 6,0 g/cm³ (Gramm pro Kubikzentimeter) und/oder E-Module kleiner oder gleich 120 GPa (GigaPascal).

Im Sinne einer möglichst raschen und einfachen Vorgehensweise zur erfindungsgemäßen Herstellung der genannten Vorform sehen bevorzugte Ausgestaltungsformen des erfindungsgemäßen Verfahrens vor, dass das Schleifwerkzeug in einer Längserstreckungsrichtung längserstreckt ist und während des gesamten Schleifvorgangs zur Herstellung des Schleifkanals oder während aller Schleifvorgänge zur Herstellung des Schleifkanals ausschließlich mit seiner Längserstreckungsrichtung in zueinander parallel angeordneten Ausrichtungen angeordnet wird. In anderen Worten wird während des oder aller Schleifvorgänge zur Herstellung des Schleifkanals das Schleifwerkzeug also weder geschwenkt noch irgendwie anders in seiner Winkellage relativ zum Rohling oder zur Vorvorform verändert. Insbesondere durch eine solche Vorgehensweise kann eine Außenkontur der Vorform hergestellt werden, die zumindest bereichsweise die Mantelfläche eines allgemeinen Zylinders ist. Hierbei stellen die Begriffe des allgemeinen Zylinders und seiner Mantelfläche auf die mathematische Definition in dem Sinne ab, dass die Mantelfläche eines solchen allgemeinen Zylinders durch Parallelverschiebung einer Geraden bzw. Erzeugenden längs einer Kurve, welche auch als Leitkurve bezeichnet werden kann, entsteht. Die Mantelfläche kann auch als Zylinderfläche bezeichnet werden und ist von den Grundflächen des so entstehenden Zylinders zu unterscheiden. Die Leitkurve kann eine beliebige, vorzugsweise in sich geschlossene oder auch offene Form aufweisen.

In bevorzugten Ausgestaltungsformen des erfindungsgemäßen Verfahrens ist vorgesehen, dass der Schleifkanal so ausgebildet wird, dass die Endaußenkontur des herzustellenden dentalen Objektes vollständig innerhalb oder höchstens bereichsweise entlang der Außenkontur der Vorform verläuft. In anderen Worten ist bei diesen Ausgestaltungsformen also vorgesehen, dass die Endaußenkontur nirgends über die Außenkontur übersteht. Dies gilt vorzugsweise sowohl in einer zweidimensionalen als auch in einer dreidimensionalen Betrachtungsweise.

Bezugnehmend auf die oben genannte Mantelfläche eines allgemeinen Zylinders kann vorgesehen sein, dass in einer zur Mantelfläche orthogonalen Schnittebene gesehen, eine Parallelprojektion der Endaußenkontur des herzustellenden dentalen Objektes in diese Schnittebene auf oder innerhalb der Schnittlinie der Außenkontur der Vorform mit der Schnittebene liegt. Die Projektionsstrahlen der Parallelprojektion sind dabei günstigerweise parallel zu einer Längserstreckungsrichtung ausgerichtet, wobei in dieser Längserstreckungsrichtung das Schleifwerkzeug während des Schleifvorgangs längserstreckt bzw. längserstreckt ausgerichtet ist.

Für das Hineinschleifen des Schleifkanals in den Rohling oder in die Vorvorform gibt es verschiedene Möglichkeiten. Bevorzugt handelt es sich jedenfalls bei dem Schleifwerkzeug um einen, in einer Längserstreckungsrichtung längserstreckten Gegenstand, welcher eine, vorzugsweise zumindest im Wesentlichen, bezüglich seiner Längsachse rotationssymmetrische Oberfläche aufweist, welche die Schleifkörner bzw. die Vielzahl von geometrisch undefinierten Schneiden trägt. Diese Oberfläche kann z.B. als eine Zylindermantelform, insbesondere eine Kreiszylindermantelform, aber auch kegelförmig oder anderweitig ausgebildet sein.

Es ist jedenfalls möglich, die Bewegung des Schleifwerkzeugs beim Hineinschleifen des Schleifkanals in den Rohling oder in die Vorvorform als eine Überlagerung einer Rotation des Schleifwerkzeugs um seine Längsachse und einer Vorschubbewegung entlang der Längsrichtung des Schleifkanals zu realisieren. In diesen Ausgestaltungsformen entspricht die Breite des so hergestellten Schleifkanals im Wesentlichen der Breite des Schleifwerkzeugs bzw. ist nur geringfügig größer.

In anderen Ausgestaltungsformen kann die Bewegung des Schleifwerkzeugs beim Hineinschleifen des Schleifkanals in den Rohling oder in die Vorvorform aber auch eine Überlagerung von drei Bewegungen sein. So kann es sich in diesen Ausgestaltungsformen um eine Überlagerung einer Rotation des Schleifwerkzeugs um seine Längsachse mit einer Vorschubbewegung entlang einer Längsrichtung des Schleifkanals und mit einer Bewegung des Schleifwerkzeugs mit seiner Längsachse zumindest mit einer Bewegungskomponente orthogonal zur Längsrichtung des Schleifkanals handeln. Hierbei ist darauf hinzuweisen, dass sowohl die Vorschubbewegung in Längsrichtung des Schleifkanals als auch die Bewegungskomponente orthogonal zur Längsrichtung des Schleifkanals letztendlich lediglich eine Relativbewegung zwischen Rohling oder Vorvorform einerseits und dem Schleifwerkzeug andererseits ist. Ob hierzu nur das Schleifwerkzeug oder nur der Rohling bzw. nur die Vorvorform oder beides bewegt wird, kann bei der Ausführung des erfindungsgemäßen Verfahrens frei gewählt werden.

Es ist auch darauf hinzuweisen, dass die Längsrichtung des Schleifkanals nicht unbedingt gerade bzw. linear sein muss. Der Schleifkanal kann durchaus gerade oder gekrümmt oder bereichsweise abgebogen oder bereichsweise gekrümmt etc. sein. Die Längsrichtung des Schleifkanals ist letztendlich die Richtung entlang des Schleifkanals.

Die Bewegungskomponente orthogonal zur Längsrichtung des Schleifkanals kann durch Bewegen des Schleifwerkzeugs mit seiner Längsachse auf in sich geschlossenen Bewegungsbahnen wie z.B. einer Kreisbahn, einer Ellipsenbahn oder einer Rechteckbahn erfolgen. Bei diesen Ausgestaltungsformen könnte man auch von einem Taumel- oder Trochoidschleifen sprechen.

Grundsätzlich kann das erfindungsgemäße Verfahren auch mit Schleifvorrichtungen durchgeführt werden, bei denen die Bewegungen des Schleifwerkzeugs und des Rohlings bzw. der Vorvorform bzw. die letztendlich durchzuführenden Relativbewegungen von Hand gesteuert werden, um so den Schleifkanal in den Rohling oder die Vorvorform hineinzuschleifen. Besonders bevorzugt werden erfindungsgemäße Verfahren aber mittels computergesteuerter Schleifvorrichtungen vollständig oder zumindest teilweise automatisiert durchgeführt. Beim Stand der Technik sind grundsätzlich sowohl zur manuellen als auch zur computergesteuerten Steuerung geeignete Schleifvorrichtungen bekannt, sodass diese nicht noch einmal weiter erläutert werden müssen.

Neben dem erfindungsgemäßen Verfahren betrifft die Erfindung auch ein Computerprogramm zur Ansteuerung einer Schleifvorrichtung, welches zur Herstellung eines Objektes mit einem erfindungsgemäßen Verfahren programmiert ist. Es handelt sich in anderen Worten somit um ein Computerprogramm, das dazu vorgesehen bzw. geschaffen ist, das erfindungsgemäße Verfahren mittels einer Schleifvorrichtung auszuführen. In nochmals anderen Worten ist das Computerprogramm so programmiert bzw. ausgestaltet, dass es eine Schleifvorrichtung so ansteuern kann, dass das erfindungsgemäße Verfahren mit dieser Schleifvorrichtung ausgeführt wird.

Weitere Merkmale und Einzelheiten bevorzugter Ausgestaltungsformen der Erfindung ergeben sich aus der nachfolgenden Figurenbeschreibung. Es zeigen:
Fig. 1 einen Rohling in teilweise durchscheinender Darstellung mit darin eingezeichnetem herzustellenden dentalen Objekt und der Vorform;
Fig. 2 nur die Vorform aus Fig. 1;
Fig. 3 eine weitere Vorform;
Fig. 4 eine Seitenansicht auf den Rohling mit eingezeichneter Vorform und eingezeichnetem Schleifkanal;
Fig. 5 in einer Ansicht wie Fig. 4 eine alternative Ausgestaltungsform einer Vorform;
Fig. 6 eine Darstellung einer ersten Möglichkeit zum Hineinschleifen eines Schleifkanals;
Fig. 7 bis 11 schematische Darstellungen zu weiteren Möglichkeiten des Hineinschleifens eines Schleifkanals;
Fig. 12 eine schematisierte Darstellung zur Herstellung des Schleifkanals in einem Schleifvorgang;
Fig. 13 eine schematisierte Darstellung zur Herstellung eines Schleifkanals in zumindest zwei Schleifvorgängen und
Fig. 14 eine Darstellung einer computergesteuerten Schleifvorrichtung zur Umsetzung des erfindungsgemäßen Verfahrens.

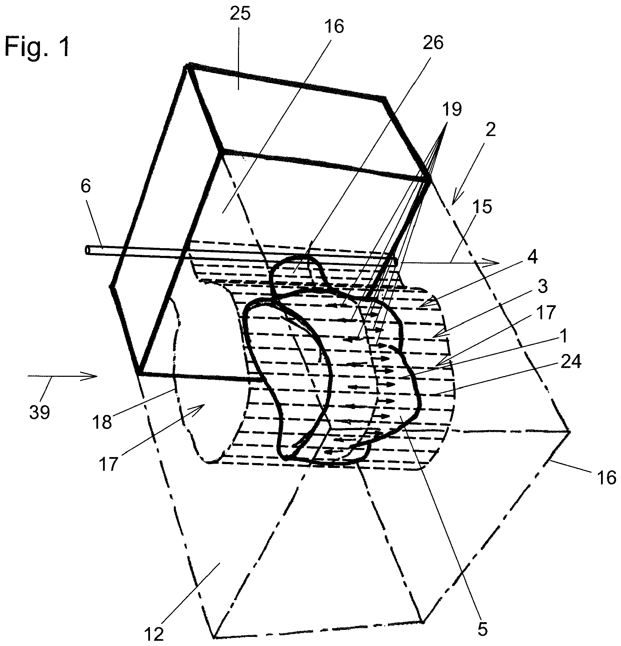

Fig. 1 zeigt zunächst einmal einen hier beispielhaft quaderförmig ausgeführten Rohling aus Keramik oder einem Keramik-Verbundwerkstoff, aus dem das dentale Objekt 1 mittels schleifender Bearbeitung herausgearbeitet werden soll. Bei dem dentalen Objekt 1 handelt es sich in diesem hier gezeigten Ausführungsbeispiel um eine Dentalprothese in Form eines künstlichen Zahnes. Dieser weist die Endaußenkontur 5 auf. Als Außenkontur 4 bzw. Endaußenkontur 5 werden jeweils die äußeren Oberflächen der jeweils genannten Körper bezeichnet. Der Rohling 2 ist in dem Bereich, in dem das dentale Objekt 1 herausgearbeitet werden muss, in Fig. 1 durchscheinend dargestellt. Das herauszuarbeitende dentale Objekt 1 ist, wie an sich bekannt, über den Tragsteg 26 mit einem Sockelbereich 25 des Rohlings 2 verbunden. Der Sockelbereich 25 kann zu gegebener Zeit durch Beseitigen des Tragsteges 26 entfernt werden.

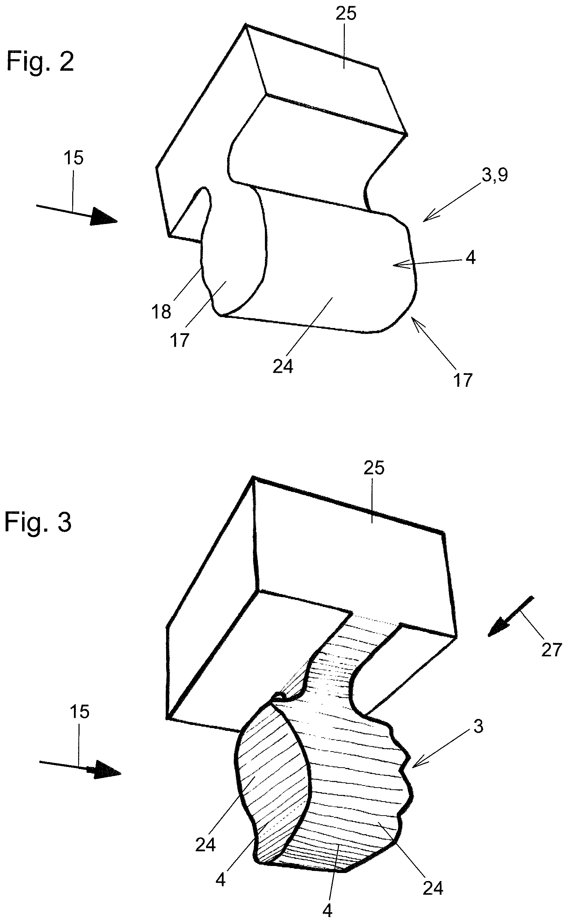

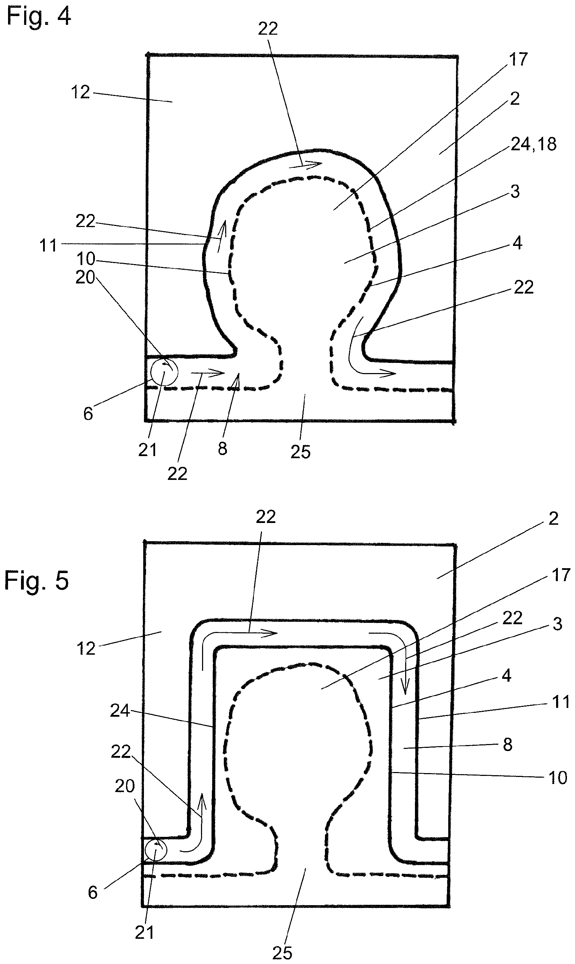

Beim Stand der Technik werden all die Bereiche des Rohlings 2, welche nicht am Ende das dentale Objekt 1, den Tragsteg 26 oder den Sockelbereich 25 bilden, durch die schleifende Bearbeitung in Schleifstaub verwandelt. Bei der Erfindung hingegen wird zur Herstellung einer Vorform 3 mit einer Außenkontur 4, welche von der Endaußenkontur 5 des herzustellenden dentalen Objektes 1 abweicht, in zumindest einem Schleifvorgang mittels des Schleifwerkzeugs 6 der Schleifvorrichtung 7 der in der Seitenansicht gemäß Fig. 4 dargestellte Schleifkanal 8 in den Rohling 2 hineingeschliffen. Am Rand 10 des Schleifkanals 8 wird dabei die Außenkontur 4 der Vorform 3 ausgebildet. Am zur Außenkontur 4 der Vorform 3 gegenüberliegenden Rand 11 des Schleifkanals 8 wird das Reststück 12 vom Rohling 2 abgetrennt. Hierdurch muss ein wesentlich kleineres Volumen, nämlich nur das Volumen des Schleifkanals 8 aus dem Rohling 2 herausgeschliffen werden. Dies spart Zeit und reduziert den Verschleiß am Schleifwerkzeug 6. Im gezeigten Ausführungsbeispiel, wie es in den Fig. 1 und 2 dargestellt ist, wird die Außenkontur 4 der Vorform 3, welche sich von der Endaußenkontur 5 des dentalen Objektes 1 unterscheidet, durch die Mantelfläche 24 eines allgemeinen Zylinders und die beiden Grundflächen dieses allgemeinen Zylinders gebildet. In den Fig. 1 und 2 handelt es sich bei den Grundflächen dieses allgemeinen Zylinders um Parallelprojektionen 17 der Endaußenkontur 5 des dentalen Objektes 1 in Schnittebenen 16. Diese Schnittebenen 16 stehen orthogonal auf der Mantelfläche 24. Der Vollständigkeit halber wird an dieser Stelle darauf hingewiesen, dass eine Parallelprojektion eine Abbildung von Punkten eines dreidimensionalen Raumes, hier insbesondere des dreidimensionalen dentalen Objektes 1, auf Punkte einer gegebenen Ebene, hier der Schnittebene 16 ist, wobei die in Fig. 1 dargestellten Projektionsstrahlen 19 zueinander parallel sind. Die so erzeugten Parallelprojektionen 17 sind in Fig. 1 eingezeichnet, sie könnten auch als Parallelprojektionsflächen bezeichnet werden. Diese Parallelprojektionen 17 sind in den dargestellten Schnittebenen 16 durch die Schnittlinien 18 begrenzt. In den Fig. 1 und 2 handelt es sich bei den Schnittlinien 18 um die Schnittlinien der Außenkontur 4 der Vorform 3 mit der jeweiligen Schnittebene 16. Die Mantelfläche 24, die einen Teilbereich der gesamten Außenkontur 4 der Vorform 3 gemäß der Fig. 1 und 2 bildet, entsteht durch Parallelverschiebung einer Geraden längs der Schnittlinie 18. Die Schnittlinie 18 bildet im mathematischen Sinn somit die Leitkurve für diese Parallelverschiebung. Die parallel verschobene Gerade bzw. Erzeugende liegt parallel zur Längserstreckungsrichtung 15 des hier stiftförmig ausgebildeten Schleifwerkzeugs 6. In den Fig. 1 und 2 wird die Parallelprojektion 17 somit von der Schnittlinie 18 der Außenkontur 4 der Vorform 3 mit der Schnittebene 16 begrenzt. Erfindungsgemäß kann aber auch vorgesehen sein, dass die Parallelprojektion 17 innerhalb eines von der Schnittlinie 18 eingefassten Bereichs liegt. Ein solches Ausführungsbeispiel wird weiter unten anhand der Fig. 5 erläutert. Günstig ist jedenfalls, wenn die Endaußenkontur 5 des herzustellenden dentalen Objektes 1 vollständig innerhalb oder höchstens bereichsweise entlang der Außenkontur 4 der Vorform 3 verläuft. Dies ist in dem Ausführungsbeispiel gemäß der Fig. 1 und 2 der Fall. Fig. 2 zeigt die durch Hineinschleifen des Schleifkanals 8 mittels des Schleifwerkzeugs 6 erzeugte Außenkontur 24 der Vorform 4, welche sich aus der Summe der Mantelfläche 24, des allgemeinen Zylinders und den Parallelprojektionen 17 in den jeweiligen Schnittebenen 16, wie sie in Fig. 1 dargestellt sind, ergibt. Durch das erfindungsgemäße Hineinschleifen des Schleifkanals 8 in den Rohling 2 wurde das in Fig. 2 nicht mehr dargestellte Reststück 12 vom Rohling 2 abgetrennt. Beim Schleifvorgang zur Herstellung des Schleifkanals 8 wurde das Schleifwerkzeug 6 ausschließlich mit seiner Längserstreckung 15 in zueinander parallel angeordneten Ausrichtungen angeordnet. Eine der Längserstreckungsrichtungen 15 ist in Fig. 2 schematisiert als Pfeil dargestellt. Vereinfacht gesprochen, wurde das in Fig. 1 dargestellte Schleifwerkzeug 6 beim Hineinfräsen des Schleifkanals zur Ausbildung der Außenkontur 4 bzw. der Mantelfläche 24 der Vorform 3 somit immer in Positionen parallel zum Pfeil 15 in Fig. 2 geführt.

Wie bereits ausgeführt, unterscheidet sich die Außenkontur 4 der Vorform 3 sowohl von der Außenkontur des ursprünglichen Rohlings 2 als auch von der Endaußenkontur 5 des herzustellenden dentalen Objektes 1. Meist ist die Außenkontur 4 der Vorform 3 eine Annäherung an die Endaußenkontur 5 des dentalen Objektes 1, welche aber noch weiter abgeschliffen werden muss, um die Endaußenkontur 5 des dentalen Objektes 1 zu erzeugen.

Um dies zu erreichen, kann nun die Vorform 3 gemäß Fig. 2 in an sich bekannter Art und Weise so abgeschliffen werden, dass sich am Ende die Endaußenkontur 5 des dentalen Objektes 1 ergibt. Es ist aber auch möglich, die Vorform gemäß Fig. 3 als eine Vorvorform 9 und damit als Ausgangspunkt für eine nochmalige Anwendung des erfindungsgemäßen Verfahrens zu verwenden, um sich so noch einmal weiter an die Endaußenkontur 5 des dentalen Objektes 1 anzunähern. Hierzu kann z.B. ein zweiter Schleifkanal 8 in die nun als Vorvorform 9 verwendete Vorform 3 gemäß Fig. 2 eingeschliffen werden. Hierdurch wird ein weiteres, hier nicht dargestelltes Reststück 12 von der Vorform 3 gemäß Fig. 2 abgetrennt. Das Endergebnis dieser nochmaligen Anwendung des erfindungsgemäßen Verfahrens ist in Fig. 3 dargestellt. Die ausgehend von der als Vorvorform 9 verwendeten Vorform 3 gemäß Fig. 2 nun erzeugte Vorform 3 gemäß Fig. 3 ist in ihrer Außenkontur 4 verglichen mit der Vorform 3 gemäß Fig. 2 näher an die Endaußenkontur 5 des dentalen Objektes 1 gemäß Fig. 1 angenähert. Sie ist mit dieser aber nach wie vor nicht identisch. Die Endaußenkontur des dentalen Objektes 1 liegt aber immer noch vollständig innerhalb oder höchstens bereichsweise auf der Außenkontur 4 der Vorform 3 gemäß Fig. 3. Beim Hineinschleifen des hier nicht explizit dargestellten Schleifkanals 8 in die Vorvorform 9 gemäß Fig. 2 wurde die Längserstreckungsrichtung des Schleifwerkzeugs 6 immer parallel zu der mit dem Pfeil 27 in Fig. 3 eingezeichneten Richtung gehalten. Diese Richtung 27 steht im gezeigten Ausführungsbeispiel orthogonal auf der durch den Pfeil 15 in Fig. 3 symbolisierten Richtung, welche auch in Fig. 2 eingezeichnet ist. Es handelt sich dabei um eine Parallele zu den Längserstreckungsrichtungen 15, in denen das Schleifwerkzeug 6 zur Erzeugung des ersten Schleifkanals 8 zum Herausarbeiten der Vorform 3 gemäß Fig. 2 gehalten wurde. Natürlich müssen diese Richtungen 15 und 27 bei aufeinander folgenden iterativen Anwendungen des erfindungsgemäßen Verfahrens nicht zwingend orthogonal zueinander stehen.

Fig. 4 zeigt nun in einer schematischen Darstellung den Verlauf des Schleifkanals 8, wie er in den Rohling 2 hineingeschliffen wird, um die Vorform 3 gemäß Fig. 1 und 2 herzustellen. Bei Fig. 4 handelt es sich um eine Seitenansicht aus Richtung 39 auf die Situation gemäß Fig. 1. Durch diese Anwendung des Verfahrens wird mittels des Schleifkanals 8 das Reststück 12 vom Rohling 2 abgetrennt. Was übrig bleibt, ist die Vorform 3 mit ihrer Außenkontur 4. Beim Hineinschleifen des Schleifkanals 8 bildet der Rand 10 des Schleifkanals 8 die Außenkontur 4 der Vorform aus. Am gegenüberliegenden Rand 11 des Schleifkanals 8 wird das Reststück 12 vom Rohling 2 abgetrennt. Der Rand 10 des Schleifkanals 8 bildet somit die Mantelfläche 24 der hier als allgemeiner Zylinder so ausgebildeten Vorform 3. In Fig. 4 bilden die Projektionen 17, welche man auch als Projektionsflächen bezeichnen könnte, die Grundflächen des Zylinders. Die Längsrichtung 22 des in den Rohling 2 hineinzuschleifenden Schleifkanals 8 ist in Fig. 4 eingezeichnet. Sie muss, wie oben ausgeführt, keinesfalls linear bzw. gerade sein.

Fig. 5 zeigt beispielhaft, dass die Außenkontur 4 der Vorform 3 nicht unbedingt auf Basis einer Parallelprojektion 17 der letztendlich herzustellenden Endaußenkontur 5 des dentalen Objektes 1 erstellt werden muss. Es reicht durchaus, wenn die Endaußenkontur 5 des herzustellenden dentalen Objektes 1 vollständig innerhalb oder höchstens bereichsweise entlang der Außenkontur 4 der Vorform 3 verläuft. In diesem Sinne wird in der Variante gemäß Fig. 5 durch Hineinschleifen eines entsprechenden Schleifkanals 8 eine Außenkontur 4 der Vorform 3 erzeugt, in welche die Endaußenkontur 5 und damit auch die Parallelprojektion 17 des dentalen Objektes 1 hineinpasst, ohne dass bereits eine große Ähnlichkeit in der Form zwischen der Außenkontur 4 der Vorform 3 und der Endaußenkontur 5 des letztendlich herzustellenden dentalen Objektes 1 besteht. Auch bei der Variante gemäß Fig. 5 wird der erfindungsgemäße Effekt erreicht, indem mittels des Schleifkanals 8 ein Reststück 12 vom Rohling 2 abgetrennt wird. Auch bei der Variante gemäß Fig. 5 kann dann aus der Vorform 3 mit wesentlich weniger Aufwand die Endaußenkontur 5 des dentalen Objektes 1 herausgeschliffen werden. Dies kann wiederum zunächst durch iteratives Anwenden des erfindungsgemäßen Verfahrens oder durch direktes Hineinschleifen der Endaußenkontur 5 in die Vorform 3 von statten gehen.

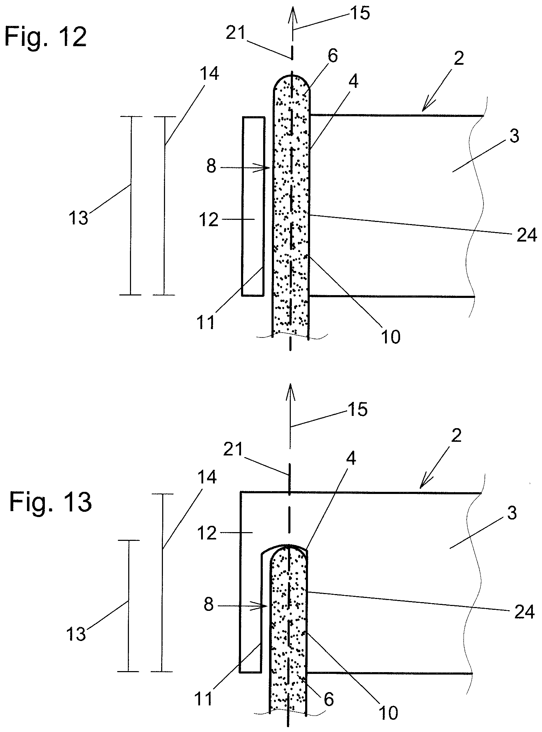

Den Varianten in Fig.4 und Fig.5 ist gemeinsam, dass hier wie in anderen bevorzugten Ausgestaltungsformen der Erfindung vorgesehen ist, dass die einander gegenüberliegenden Ränder 10 und 11 des Schleifkanals 8, in den Bereichen, in denen beide einander gegenüberliegenden Ränder 10 und 11 des Schleifkanals 8 ausgebildet sind, über den gesamten Verlauf des Schleifkanals 8 in Längsrichtung 22 des Schleifkanals 8 einen konstanten Abstand zueinander haben. Dies gilt bevorzugt für Seitenansichten, wie sie in den Fig. 4 und 5 gezeigt sind, aus Richtung 39 auf die Situation gemäß Fig. 1 also aus Richtung parallel zur Längserstreckungsrichtung 15 des Schleifwerkzeugs 6. In Richtung der Eindringtiefe 13 des Schleifwerkzeugs 6, wie sie in den Fig. 12 und 13 dargestellt ist, kann der Abstand der die Ränder 10 und 11 des Schleifkanals 8 bildenden Wände konstant sein oder aber auch variieren. Verwendet man zum Beispiel ein kreiszylindermantelförmiges Schleifwerkzeug 6 so können diese, die Ränder 10 und 11 des Schleifkanals 8 ausbildenden Wände zueinander parallel sein, wie dies in den Fig. 12 und 13 zu sehen ist. Sie haben dann also in Richtung der Eindringtiefe 13 des Schleifwerkzeugs 6 gesehen, einen konstanten Abstand zueinander. Verwendet man hingegen z.B. ein Schleifwerkzeug 6 mit konischer Mantelfläche so kann dies dazu führen, dass die die Ränder 10 und 11 ausbildenden Wände des Schleifkanals 8 in Richtung der Eindringtiefe 13 des Schleifwerkzeugs 6 gesehen, keinen konstanten Abstand zueinander aufweisen sondern z.B. aufeinander zu laufen. Auch in diesen, zuletzt genannten Ausführungsvarianten ist aber bevorzugt vorgesehen, dass die einander gegenüberliegenden Ränder 10 und 11 des Schleifkanals 8, in den Bereichen, in denen beide einander gegenüberliegenden Ränder 10 und 11 des Schleifkanals 8 ausgebildet sind, über den gesamten Verlauf des Schleifkanals 8 in Längsrichtung 22 des Schleifkanals 8 einen konstanten Abstand zueinander haben.

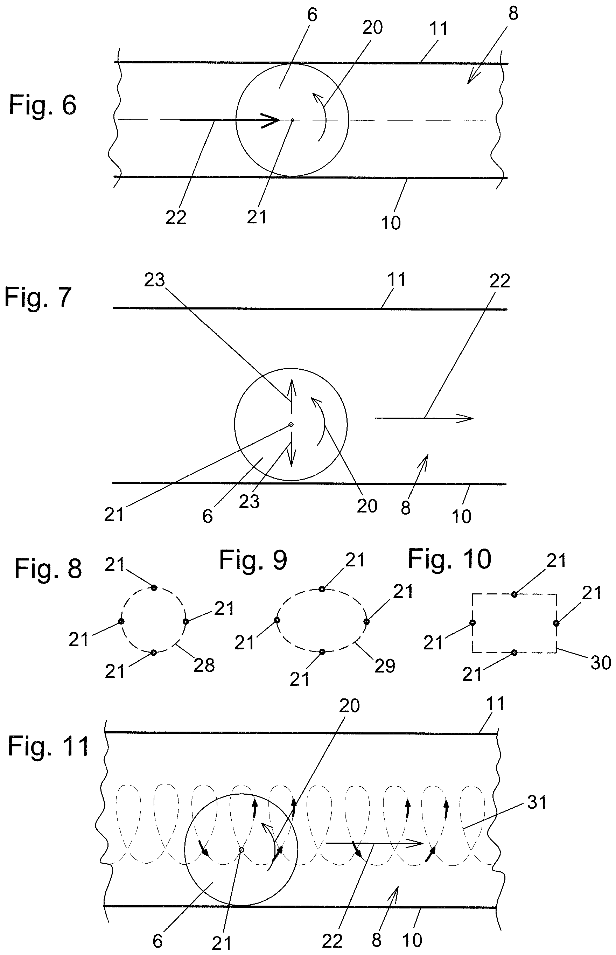

Anhand der Fig. 6 bis 11 werden nun verschiedene Varianten dargestellt, wie das Hineinschleifen der Schleifkanäle 8 in den Rohling 2 oder die Vorvorform 9 von statten gehen kann. Bevorzugt wird hierzu jeweils ein längserstrecktes stiftartiges Schleifwerkzeug 6 verwendet, wie dies in Fig. 1 aber auch in den Fig. 12 und 13 dargestellt ist. Auf der äußeren Oberfläche und insbesondere der Mantelfläche dieses Schleifwerkzeugs 6 kann z.B. eine Vielzahl von Schleifkörnern angeordnet sein, um die für das Schleifen benötigten geometrisch nicht definierten Schneiden auszubilden.

In den Fig. 6, 7 und 11 ist jeweils eine Draufsicht auf den Schleifkanal 8 dargestellt. In dieser Draufsicht ist von den Schleifwerkzeugen 6 jeweils nur ein schematisierter kreisförmiger Querschnitt, welcher normal zu ihrer Längserstreckungsrichtung 15 liegt, dargestellt.

In der Variante gemäß Fig. 6 handelt es sich bei der Bewegung des Schleifwerkzeugs 6 beim Hineinschleifen des Schleifkanals 8 in den Rohling 2 oder in die Vorvorform 9 um eine Überlagerung von zwei Bewegungen. Es ist zum einen die Rotation 20 des Schleifwerkzeugs 6 um seine Längsachse 21, wobei die Längsachse 21 in der Längserstreckungsrichtung 15 verläuft. Diese Rotation 20 wird bei der Variante gemäß Fig. 6 von einer Vorschubbewegung überlagert, welche entlang der Längsrichtung 22 des Schleifkanals 8 erfolgt. Bei dieser Vorgehensweise ist die Breite des Schleifkanals 8, also der Abstand zwischen seinen Rändern 10 und 11 im Wesentlichen genauso groß bzw. nur wenig größer als der Durchmesser des Schleifwerkzeugs 6. Die Vorschubbewegung in Längsrichtung 22 des Schleifkanals 8 entsteht durch eine Relativbewegung zwischen Schleifwerkzeug 6 und Rohling 2 oder Vorvorform 9. Ob zur Erzeugung dieser Relativbewegung das Schleifwerkzeug 6 oder der Rohling 2 oder die Vorvorform 9 bewegt werden oder beide Bewegungen ausgeführt werden, ist letztendlich zweitrangig.

Die Fig. 7 bis 11 dienen der Darstellung einer Variante, bei der die Bewegung des Schleifwerkzeugs 6 beim Hineinschleifen des Schleifkanals 8 in den Rohling 2 oder in die Vorvorform 9 eine Überlagerung von drei Bewegungen ist. Zusätzlich zu den beiden Bewegungsformen der Rotation 20 und des Vorschubs in Längsrichtung 22 des Schleifkanals 8 ist in den Fig. 7 bis 11 noch eine Überlagerung mit einer Bewegung des Schleifwerkzeugs 6 mittels seiner Längsachse 21 mit zumindest einer Bewegungskomponente 23 orthogonal zur Längsrichtung 22 des Schleifkanals 8 vorgesehen. Hierdurch wird ein Schleifkanal 8 mit einer Breite, also einem Abstand zwischen den Rändern 10 und 11 erzeugt, welche in der Regel deutlich größer als der Durchmesser des Schleifwerkzeugs 6 ist. Diese Vorgehensweise könnte auch als Taumelschleifen bezeichnet werden. Erstaunlicherweise wird bei dieser Art des Schleifens ein schnellerer Vortrieb bei geringerer Abnutzung des Schleifwerkzeugs 6 erreicht. Die zusätzliche Bewegung mit einer Bewegungskomponente 23 orthogonal zur Längsrichtung 22 führt, für sich allein gesehen, in bevorzugten Ausgestaltungsformen zu einer Bewegung der Längsachse 21 des Schleifwerkzeugs 6 auf einer in sich geschlossenen Bahn. Beispiele solcher in sich geschlossenen Bahnen, welche realisiert werden können, sind in den Fig. 8 bis 10 schematisiert dargestellt. In Fig. 8 wird die Längsachse 21 des Schleifwerkzeugs 6 auf einer Kreisbahn 28 geführt, in Fig. 9 auf einer Ellipsenbahn 29 und in Fig. 10 auf einer Rechteckbahn 30. Auch andere Bahnformen sind möglich. In den Fig. 8 bis 10 sind der Übersichtlichkeit halber jeweils nur die Längsachsen 21 des Schleifwerkzeugs 6 an zufällig ausgewählten Positionen entlang der jeweiligen Bahnen 28, 29 und 30 eingezeichnet.

Realisiert man die Überlagerung dieser drei Bewegungen mit einer Bewegung der Längsachse 21 auf einer Kreisbahn 28 gemäß Fig. 8, so ergibt sich, wenn man die Bewegung der Längsachse 21 nachzeichnet, insgesamt eine Trochoidbahn 31 in Form einer verlängerten Zykloide. Dies ist schematisiert in Fig. 11 dargestellt. Man könnte in dieser Ausgestaltungsform beim Taumelschleifen auch von einem Trochoidschleifen sprechen.

Wie bereits eingangs ausgeführt, ist bevorzugt vorgesehen, dass der Schleifkanal 8 in einem einzigen Schleifvorgang in den Rohling 2 oder die Vorvorform 9 hineingeschliffen wird und somit das Reststück 12 oder die Reststücke 12 mit diesem einzigen Schleifvorgang vom Rohling 2 oder von der Vorvorform 9, vorzugsweise vollständig, abgetrennt wird bzw. werden. Hierzu wird die Eindringtiefe 13 des Schleifwerkzeugs 6 in den Rohling 2 oder in die Vorvorform 9 beim Hineinschleifen des Schleifkanals so groß eingestellt, dass der Schleifkanal 8 in einem einzigen Schleifvorgang in seiner vollen Tiefe 14 ausgebildet wird. Dies ist in Fig. 12 beispielhaft gezeigt. Das Schleifwerkzeug 6 durchdringt dabei den Rohling 2 in seiner vollen Tiefe 14. In Fig. 12 steht das Schleifwerkzeug 6 sogar auf beiden Seiten ein Stück weit über den Rohling 2 über.

Alternativ kann aber auch vorgesehen sein, dass mehrere Schleifvorgänge zur Ausbildung des Schleifkanals 8 in seiner vollen Tiefe 14 notwendig sind. Bevorzugt ist die Anzahl der Schleifvorgänge auch dabei aber auf einzelne wenige, vorzugsweise höchstens fünf, Schleifvorgänge beschränkt. Fig. 13 zeigt beispielhaft eine Ausführungsform, bei der zwei Schleifvorgänge notwendig sind, um den Schleifkanal 8 in seiner vollen Tiefe 14 auszubilden, um dann damit das Reststück 12 vom restlichen Rohling 2 vollständig abzutrennen. Fig. 13 zeigt beispielhaft die Eindringtiefe 13 beim ersten Schleifvorgang. Nachdem in Fig. 13 die Eindringtiefe 13 des Schleifwerkzeugs 6 kleiner als die volle Tiefe 14 ist, muss das verbleibende Stück des Schleifkanals 8 in einem zweiten Schleifvorgang herausgeschliffen werden. Hierzu kann z.B. der Rohling 2 um 180° gedreht werden, damit dann von der anderen Seite das Schleifwerkzeug 6 den Schleifkanal 8 fertigstellen kann. Genauso gut ist es aber möglich, den zweiten Schleifvorgang von derselben Seite wie in der Situation gemäß Fig. 13 dargestellt, durchzuführen, wenn man die Eindringtiefe 13 des Schleifwerkzeugs 6 dann entsprechend so einstellt, dass die volle Tiefe 14 erreicht wird. Außerdem ist darauf hinzuweisen, dass nach Fertigstellung des Schleifkanals 8 in seiner Tiefe gemäß Fig. 13 dieser Schleifkanal 8 auch als Sollbruchstelle zum Abbrechen des Reststücks 12 vom Rohling 3 genutzt werden könnte. Das hier Geschilderte gilt natürlich auch beim Hineinschleifen eines Schleifkanals 8 in eine Vorvorform 9.

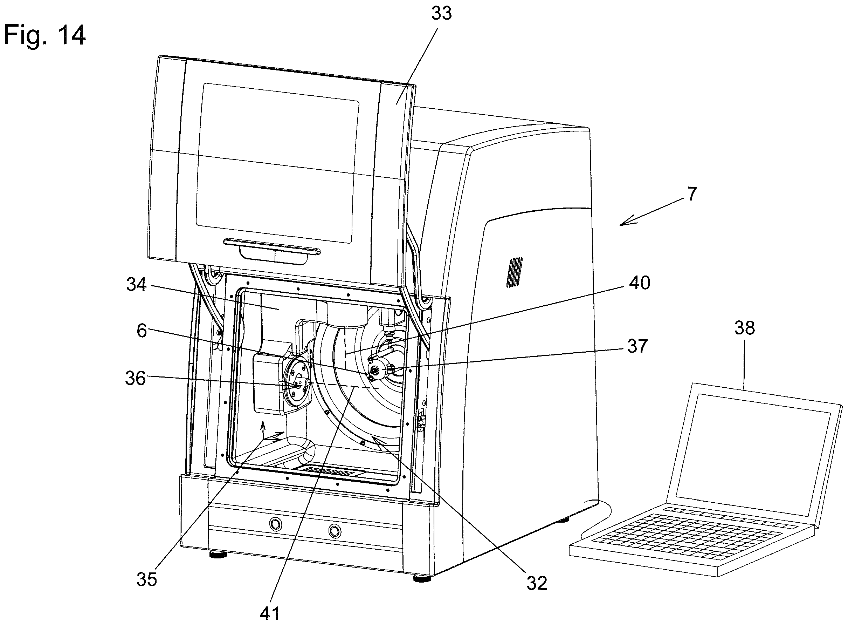

Fig. 14 zeigt nun noch schematisiert und beispielhaft eine mittels Steuer-Computer 38, also mittels Computer angesteuerte Schleifvorrichtung 7, mit der das erfindungsgemäße Verfahren ausgeführt werden kann. Die Schleifvorrichtung 7 umfasst das Schleifwerkzeug 6, welches im Werkzeugträger 37 gehalten und um seine Längsachse zur Erzeugung der Rotation 20 rotiert werden kann. Bevorzugt kann das Schleifwerkzeug 6 samt Werkzeugträger 37 auch zusätzlich noch in den Bewegungsrichtungen 35 im Bearbeitungshohlraum 32 der Schleifvorrichtung 7 bewegt werden. Der hier nicht dargestellte Rohling 2 oder eben eine Vorvorform 9 wird an der Rohlingsaufnahme 36 eines Tragarms 34 befestigt. Der Tragarm 34 kann in bevorzugten Ausgestaltungsformen um die Schwenkachse 40 geschwenkt werden. Der Rohling 2 oder die Vorvorform 9 an der Rohlingaufnahme 36 kann bevorzugt um die Schwenkachse 41 geschwenkt werden. Die Schwenkachsen 40 und 41 sind bevorzugt orthogonal zueinander angeordnet. Mit solchen an sich bekannten Schleifvorrichtungen 7 können sowohl Nass- als auch Trockenschleifverfahren durchgeführt werden. Der Bearbeitungshohlraum 32 kann günstigerweise mittels der Klappe 33 verschlossen werden, um den Austritt von Staub und/oder Feuchtigkeit während des Schleifvorgangs zu verhindern. Die Ansteuerung der Schleifvorrichtung 7 kann grundsätzlich manuell erfolgen. Bevorzugt erfolgt die Ansteuerung und damit die Umsetzung des erfindungsgemäßen Verfahrens mittels der Schleifvorrichtung 7 aber computergesteuert über den Steuer-Computer 38, wie dies in Fig. 14 auch angedeutet ist. Um das erfindungsgemäße Verfahren ausführen zu können, läuft auf dem Steuer-Computer 38 günstigerweise das erfindungsgemäße Computerprogramm, welches die Schleifvorrichtung 7 so ansteuert, dass mittels der Schleifvorrichtung 7 das dentale Objekt 1 unter Umsetzung des erfindungsgemäßen Verfahrens hergestellt werden kann.

**Legende zu den Hinweisziffern:**

| | | | |
|---|---|---|---|
| 1 | dentales Objekt | 22 | Längsrichtung |
| 2 | Rohling | 23 | Bewegungskomponente |
| 3 | Vorform | 24 | Mantelfläche |
| 4 | Außenkontur | 25 | Sockelbereich |
| 5 | Endaußenkontur | 26 | Tragsteg |
| 6 | Schleifwerkzeug | 27 | Pfeil |
| 7 | Schleifvorrichtung | 28 | Kreisbahn |
| 8 | Schleifkanal | 29 | Ellipsenbahn |
| 9 | Vorvorform | 30 | Rechteckbahn |
| 10 | Rand | 31 | Trochoidbahn |
| 11 | Rand | 32 | Bearbeitungshohlraum |
| 12 | Reststück | 33 | Klappe |
| 13 | Eindringtiefe | 34 | Tragarm |
| 14 | volle Tiefe | 35 | Bewegungsrichtung |
| 15 | Längserstreckungsrichtung | 36 | Rohlingsaufnahme |
| 16 | Schnittebene | 37 | Werkzeugträger |
| 17 | Parallelprojektion | 38 | Steuer-Computer |
| 18 | Schnittlinie | 39 | Richtung |
| 19 | Projektionsstrahlen | 40 | Schwenkachse |
| 20 | Rotation | 41 | Schwenkachse |
| 21 | Längsachse | | |

## Patentansprüche

1. Verfahren zur Herstellung eines dentalen Objektes (1) mittels schleifender Bearbeitung eines Rohlings (2) aus Keramik oder einem Keramik-Kunststoff-Verbundmaterial, wobei zur Herstellung einer Vorform (3) mit einer Außenkontur (4), welche von einer Endaußenkontur (5) des herzustellenden dentalen Objektes (1) abweicht, in zumindest einem Schleifvorgang mittels eines Schleifwerkzeugs (6) einer Schleifvorrichtung (7) ein Schleifkanal (8) in den Rohling (2) oder in eine aus dem Rohling (2) bereits herausgearbeitete Vorvorform (9) hineingeschliffen wird, wobei mit dem Schleifkanal (8) an einem seiner Ränder (10) die Außenkontur (4) der Vorform (3) ausgebildet wird, **dadurch gekennzeichnet, dass** am zur Außenkontur (4) der Vorform (3) gegenüberliegenden Rand (11) des Schleifkanals (8) zumindest bereichsweise zumindest ein Reststück (12) vom Rohling (2) oder von der Vorvorform (9) abgetrennt wird.

2. Verfahren nach Anspruch 1, **dadurch gekennzeichnet, dass** eine Eindringtiefe (13) des Schleifwerkzeugs (6) in den Rohling (2) oder in die Vorvorform (9) beim Hineinschleifen des Schleifkanals (8) so groß eingestellt wird, dass der Schleifkanal (8) in einem einzigen Schleifvorgang oder in höchstens fünf Schleifvorgängen in seiner vollen Tiefe (14) ausgebildet wird.

3. Verfahren nach Anspruch 1 oder 2, **dadurch gekennzeichnet, dass** nach Herstellung der Vorform (3) die Endaußenkontur (5) des herzustellenden dentalen Objektes (1) ausschließlich oder zumindest auch durch weiteres Abschleifen der Vorform (3) hergestellt wird.

4. Verfahren nach einem der Ansprüche 1 bis 3, **dadurch gekennzeichnet, dass** das Schleifwerkzeug (6) in einer Längserstreckungsrichtung (15) längserstreckt ist und während des gesamten Schleifvorgangs zur Herstellung des Schleifkanals (8) oder während aller Schleifvorgänge zur Herstellung des Schleifkanals (8) ausschließlich mit seiner Längserstreckungsrichtung (19) in zueinander parallel angeordneten Ausrichtungen angeordnet wird.

5. Verfahren nach einem der Ansprüche 1 bis 4, **dadurch gekennzeichnet, dass** die Endaußenkontur (5) des herzustellenden dentalen Objektes (1) vollständig innerhalb oder höchstens bereichsweise entlang der Außenkontur (4) der Vorform (3) verläuft.

6. Verfahren nach einem der Ansprüche 1 bis 5, **dadurch gekennzeichnet, dass** die Außenkontur (4) der Vorform (3) zumindest bereichsweise die Mantelfläche (24) eines allgemeinen Zylinders ist.

7. Verfahren nach Anspruch 6, **dadurch gekennzeichnet, dass** in einer zur Mantelfläche (24) orthogonalen Schnittebene (16) gesehen, eine Parallelprojektion (17) der Endaußenkontur (5) des herzustellenden dentalen Objektes (1) in diese Schnittebene (16) auf oder innerhalb der Schnittlinie (18) der Außenkontur (4) der Vorform (3) mit der Schnittebene (16) liegt.

8. Verfahren nach Anspruch 7, **dadurch gekennzeichnet, dass** die Projektionsstrahlen (19) der Parallelprojektion (17) parallel zu einer Längserstreckungsrichtung (15), in der das Schleifwerkzeug (6) während des Schleifvorgangs längserstreckt ist, ausgerichtet sind.

9. Verfahren nach einem der Ansprüche 1 bis 8, **dadurch gekennzeichnet, dass** eine Bewegung des Schleifwerkzeugs (6) beim Hineinschleifen des Schleifkanals (8) in den Rohling (2) oder in die Vorvorform (9) eine Überlagerung einer Rotation (20) des Schleifwerkzeugs (6) um seine Längsachse (21) und einer Vorschubbewegung entlang einer Längsrichtung (22) des Schleifkanals (8) oder eine Überlagerung einer Rotation (20) des Schleifwerkzeugs (6) um seine Längsachse (21) und einer Vorschubbewegung entlang einer Längsrichtung (22) des Schleifkanals (8) und einer Bewegung des Schleifwerkzeugs (6) mit seiner Längsachse (21) mit zumindest einer Bewegungskomponente (21) orthogonal zur Längsrichtung (22) des Schleifkanals (8) ist.

10. Computerprogramm zur Ansteuerung einer Schleifvorrichtung (7), **dadurch gekennzeichnet, dass** das Computerprogramm zur Herstellung eines dentalen Objektes (1) mit einem Verfahren gemäß einem der Ansprüche 1 bis 9 programmiert ist.

## Claims

1. Method for the production of a dental object (1) by means of grinding machining of a blank (2) made of ceramic or a ceramic-plastic composite material, wherein, for the production of a preform (3) having an outer contour (4) that differs from a final outer contour (5) of the dental object (1) to be produced, a grinding channel (8) is ground into the blank (2) or into a pre-preform (9) already made from the blank (2), in at least one grinding process by means of a grinding tool (6) of a grinding device (7), wherein the outer contour (4) of the preform (3) is formed with the grinding channel (8) at one of its edges (10), **characterised in that**, at the edge (11) of the grinding channel (8) opposing the outer contour (4) of the preform (3), at least one remaining piece (12) is removed from the blank (2) or from the pre-preform (9) at least in regions.

2. Method according to claim 1, **characterised in that** a penetration depth (13) of the grinding tool (6) into the blank (2) or into the pre-preform (9) on the grinding-in of the grinding channel (8) is set so large that the grinding channel (8) is formed in its full depth (14) in a single grinding process or in at most five grinding processes.

3. Method according to claim 1 or 2, **characterised in that** after production of the preform (3) the final outer contour (5) of the dental object (1) to be produced is produced exclusively or at least also by further grinding-off of the preform (3).

4. Method according to one of claims 1 to 3, **characterised in that** the grinding tool (6) is longitudinally extended in a longitudinal extending direction (15) and, during the entire grinding process for the production of the grinding channel (8) or during all the grinding processes for the production of the grinding channel (8), is arranged exclusively with its longitudinal extending direction (19) in orientations arranged parallel to one another.

5. Method according to one of claims 1 to 4, **characterised in that** the final outer contour (5) of the dental object (1) to be produced runs completely within or at most in regions along the outer contour (4) of the preform (3).

6. Method according to one of claims 1 to 5, **characterised in that** the outer contour (4) of the preform (3) is at least in regions the lateral surface (24) of a general cylinder.

7. Method according to claim 6, **characterised in that**, seen in a section plane (16) orthogonal to the lateral surface (24), a parallel projection (17) of the final outer contour (5) of the dental object (1) to be produced into this plane (16) lies on or within the section line (18) of the outer contour (4) of the preform (3) with the section plane (16).

8. Method according to claim 7, **characterised in that** the projection rays (19) of the parallel projection (17) are oriented parallel to a longitudinal extending direction (15), in which the grinding tool (6) is longitudinally extended during the grinding process.

9. Method according to one of claims 1 to 8, **characterised in that** a movement of the grinding tool (6) on the grinding-in of the grinding channel (8) into the blank (2) or into the pre-preform (9) is a superimposition of a rotation (20) of the grinding tool (6) about its longitudinal axis (21) and of a feed movement along a longitudinal direction (22) of the grinding channel (8) or a superimposition of a rotation (20) of the grinding tool (6) about its longitudinal axis (21) and of a feed movement along a longitudinal direction (22) of the grinding channel (8) and of a movement of the grinding tool (6) with its longitudinal axis (21) with at least one movement component (21) orthogonal to the longitudinal direction (22) of the grinding channel (8).

10. Computer program for driving a grinding device (7), **characterised in that** the computer program is programmed for the production of a dental object (1) with a method according to one of claims 1 to 9.

## Revendications

1. Procédé de fabrication d'un objet dentaire (1) par meulage d'une ébauche (2) faite de céramique ou d'un matériau composite en céramique et en matière plastique, dans lequel pour la fabrication d'une préforme (3) présentant un contour extérieur (4), lequel est différent d'un contour extérieur final (5) de l'objet dentaire (1) à fabriquer, un canal à meuler (8) est meulé dans l'ébauche (2) ou dans une préforme préalable (9) déjà façonnée à partir de l'ébauche (2), au cours d'au moins une procédure de meulage au moyen d'un outil de meulage (6) d'un dispositif de meulage (7), dans lequel le contour extérieur (4) de la préforme (3) est formé au moyen du canal à meuler (8) au niveau d'un des bords (10) de celui-ci, **caractérisé en ce qu'**au moins une pièce restante (12) est séparée au moins par endroits de l'ébauche (2) ou de la préforme (9) au niveau du bord (11), opposé au contour extérieur (4) de la préforme (3), du canal à meuler (8).

2. Procédé selon la revendication 1, **caractérisé en ce qu'**une profondeur de pénétration (13) de l'outil de meulage (6) dans l'ébauche (2) ou dans la préforme préalable (9) lors du meulage du canal à meuler (8) est ajustée de manière à être assez grande pour que le canal à meuler (8) soit formé dans l'intégralité de sa profondeur (14) au cours d'une seule procédure de meulage ou au maximum au cours de cinq procédures de meulage.

3. Procédé selon la revendication 1 ou 2, **caractérisé en ce que**, une fois la préforme (3) fabriquée, le contour extérieur final (5) de l'objet dentaire (1) à fabriquer est fabriqué exclusivement ou au moins également à la suite d'un meulage supplémentaire de la préforme (3).

4. Procédé selon l'une quelconque des revendications 1 à 3, **caractérisé en ce que** l'outil de meulage (6) est étendu longitudinalement dans une direction d'étendue longitudinale (15) et est agencé exclusivement avec sa direction d'étendue longitudinale (19) dans des orientations parallèles les unes aux autres pendant toute la procédure de meulage pour la fabrication du canal à meuler (8) ou pendant toutes les procédures de meulage pour la fabrication du canal à meuler (8).

5. Procédé selon l'une quelconque des revendications 1 à 4, **caractérisé en ce que** le contour extérieur final (5) de l'objet dentaire (1) à fabriquer s'étend entièrement à l'intérieur ou tout au plus par endroits le long du contour extérieur (4) de la préforme (3).

6. Procédé selon l'une quelconque des revendications 1 à 5, **caractérisé en ce que** le contour extérieur (4) de la préforme (3) est au moins par endroits la surface extérieure (24) d'un cylindre général.

7. Procédé selon la revendication 6, **caractérisé en ce que**, vu dans un plan de coupe (16) perpendiculaire à la surface extérieure (24), une projection parallèle (17) du contour extérieur final (5) de l'objet dentaire (1) à fabriquer dans ce plan de coupe (16) se situe sur la ligne de coupe (18) du contour extérieur (4) de la préforme (3) avec le plan de coupe (16) ou à l'intérieur de celle-ci.

8. Procédé selon la revendication 7, **caractérisé en ce que** les faisceaux de projection (19) de la projection parallèle (17) sont orientés parallèlement à une direction d'étendue longitudinale (15) dans laquelle l'outil de meulage (6) est étendu longitudinalement pendant la procédure de meulage.

9. Procédé selon l'une quelconque des revendications 1 à 8, **caractérisé en ce qu'**un mouvement de l'outil de meulage (6), lors du meulage du canal à meuler (8) dans l'ébauche (2) ou dans la préforme préalable (9), est une superposition d'une rotation (20) de l'outil de meulage (6) autour de l'axe longitudinal (21) de celui-ci et d'un mouvement d'avance le long d'une direction longitudinale (22) du canal à meuler (8) ou une superposition d'une rotation (20) de l'outil de meulage (6) autour de l'axe longitudinal (21) de celui-ci et d'un mouvement d'avance le long d'une direction longitudinale (22) du canal à meuler (8) et d'un mouvement de l'outil de meulage (6) avec l'axe longitudinal (21) de celui-ci présentant au moins une composante de mouvement (21) perpendiculaire à la direction longitudinale (22) du canal à meuler (8).

10. Programme informatique pour la commande d'un dispositif de meulage (7), **caractérisé en ce que** le programme informatique est programmé pour la fabrication d'un objet dentaire (1) au moyen d'un procédé selon l'une quelconque des revendications 1 à 9.
